# EUROPEAN PATENT APPLICATION

(11) **EP 4 332 248 A1**
(43) Date of publication of application: **06.03.2024**
(21) Application number: 22795684.4
(22) Date of filing: 22.04.2022
(51) Int. Cl.: C21D 9/40, F16C 19/02, F16C 33/62, C22C 38/00, C22C 38/24, C21D 1/06, C23C 8/26

(54) **ROLLING BEARING**

(30) Priority: 30.04.2021 JP 2021077614
(71) Applicant: NTN Corporation, Osaka-shi, Osaka 530-0005 (JP)
(72) Inventor: AKAHORI, Masato, Iwata-shi, Shizuoka 438-8510 (JP); MIWA, Noriaki, Kuwana-shi, Mie 511-0867 (JP); SATO, Miyu, Kuwana-shi, Mie 511-0867 (JP); YAMADA, Masahiro, Kuwana-shi, Mie 511-0867 (JP)
(74) Representative: Brüntjen, Thorsten
(86) International application number: PCT/JP2022/018566
(87) International publication number: WO 2022/230771

(57) **Abstract**

A rolling bearing (100) includes a plurality of balls (30) and two raceway members (10, 20). The balls and the raceway members have contact surfaces. In at least either of balls and raceway members, a superficial part (50) is formed in a region from the contact surface to a depth of 20 µm. Of the balls and the raceway members, the member in which a superficial part is formed in the contact surface is made of steel that has been quenched. A raceway surface (10aa, 20aa) which is a contact surface of the raceway member is a partial arc in a sectional view that passes a central axis (A) of the rolling bearing and is parallel with the central axis. The diameter of the partial arc is greater than or equal to 1.01 times and less than or equal to 1.08 times the diameter of the ball.

## Description

### TECHNICAL FIELD

The present invention relates to a rolling bearing.

### BACKGROUND ART

Conventionally, rolling members such as a raceway member and a rolling element of a rolling bearing have been formed of high-carbon chromium bearing steel (SUJ2, SUJ3 and so on) defined in JIS standard (JIS G 4805:2008). Also, in order to improve the durability in the surface of rolling members, a nitriding treatment for the surface of the rolling members have been conventionally performed.

In recent years, use environments of rolling bearings are becoming more severe. Therefore, it is sometimes the case that sufficient durability is not obtained only by forming a rolling member of a common steel material such as SUJ2, SUJ3 or the like, and subjecting the superficial part to a nitriding treatment.

In rolling bearings described in PTL 1 (Japanese Patent No. 3873741) and PTL 2 (Japanese Patent No. 5372316), an attempt is made to improve the abrasion resistance and the seizure resistance under the environment accompanying a sliding contact, and under the environment where lubricating oil is exhausted by forming a rolling member of a steel material to which a large quantity of silicon (Si) or manganese (Mn) is added.

In a rolling bearing described in PTL 3 (Japanese Patent Laying-Open No. 2000-282178), penetration of hydrogen into steel is prevented by adding a large quantity of chromium (Cr) to the steel material for use in the rolling member and forming a passive state film on the surface.

### CITATION LIST

### PATENT LITERATURE

PTL 1: Japanese Patent No. 3873741
PTL 2: Japanese Patent No. 5372316
PTL 3: Japanese Patent Laying-Open No. 2000-282178

### SUMMARY OF INVENTION

### TECHNICAL PROBLEM

However, in consideration of recent demands for improvement in durability of rolling members, durability of rolling members can be insufficient depending on the application in rolling bearings described in PTL 1 to PTL 3.

For example, in the rolling bearing according to PTL 3, carbide in steel can become coarse by addition of chromium to the steel material. The coarse carbide can become a stress concentration source, and can become an origin of early flaking.

While the passive state film has the effect of preventing dispersion of hydrogen into steel, it also has the effect of promoting adsorption of hydrogen. When the rolling bearing according to PTL 3 is used intermittently, hydrogen is dissipated at the time of stoppage, so that delaying the penetration of hydrogen into steel by a passive state film is effective for preventing early flaking. However, when the rolling bearing described in PTL 3 is used continuously, a lot of hydrogen is adsorbed by the passive state film, and the quantity of hydrogen penetrating into steel increases, resulting that early flaking is easy to occur. In particular, occurrence of oil film breakage in a contact part between a raceway member and a rolling element advances abrasion in the contact part, resulting in increase in the amount of hydrogen entering the steel, and thus early peeling caused by hydrogen brittleness becomes more likely to occur.

In the future, rolling bearings that are continuously operated without human intervention are expected to increase, however, for such application, conventional rolling bearings including the rolling bearing described in PTL 3 are insufficient in durability.

The present invention was devised in light of the problems of the conventional art described above. More specifically, the present invention provides a rolling bearing capable of further elongating the life.

### SOLUTION TO PROBLEM

A rolling bearing according to one aspect of the present invention includes a plurality of balls and two raceway members. The balls and the raceway members have contact surfaces. In at least either of balls and raceway members, a superficial part is formed in a region from the contact surface to a depth of 20 µm. Of the balls and the raceway members, the member in which a superficial part is formed in the contact surface is made of steel that has been quenched. Steel contains greater than or equal to 0.70 mass% and less than or equal to 1.10 mass% of carbon, greater than or equal to 0.15 mass% and less than or equal to 0.35 mass% of silicon, greater than or equal to 0.30 mass% and less than or equal to 0.60 mass% of manganese, greater than or equal to 1.30 mass% and less than or equal to 1.60 mass% of chromium, greater than or equal to 0.01 mass% and less than or equal to 0.50 mass% of molybdenum, and greater than or equal to 0.01 mass% and less than or equal to 0.50 mass% of vanadium, and the remainder of iron and inevitable impurities. A content of nitrogen in the superficial part is greater than or equal to 0.2 mass% and less than or equal to 0.8 mass%. A raceway surface which is a contact surface of a raceway member is a partial arc in a sectional view that passes the central axis of the rolling bearing and is parallel with the central axis. The diameter of the partial arc is greater than or equal to 1.01 times and less than or equal to 1.08 times the diameter of the ball.

In the rolling bearing, steel may contain greater than or equal to 0.90 mass% and less than or equal to 1.10 mass% of carbon, greater than or equal to 0.20 mass% and less than or equal to 0.30 mass% of silicon, greater than or equal to 0.40 mass% and less than or equal to 0.50 mass% of manganese, greater than or equal to 1.40 mass% and less than or equal to 1.60 mass% of chromium, greater than or equal to 0.20 mass% and less than or equal to 0.30 mass% of molybdenum, and greater than or equal to 0.20 mass% and less than or equal to 0.30 mass% of vanadium, and the remainder of iron and inevitable impurities. A content of nitrogen in the superficial part may be greater than or equal to 0.3 mass% and less than or equal to 0.5 mass%.

In the above rolling bearing, in a sectional view orthogonal to the contact surface in which the superficial part is formed, a total of greater than or equal to 60 precipitates having a grain size of less than or equal to 0.50 µm exist per 100 µm² in the superficial part, and a total of area fractions of the precipitates in the superficial part may be greater than or equal to 1% and less than or equal to 10%. A volume fraction of retained austenite quantity at a position of 50 µm deep from the contact surface in which the superficial part is formed may be greater than or equal to 20% and less than or equal to 40%. Hardness at a position of 50 µm deep from the contact surface in which the superficial part is formed may be greater than or equal to 653 Hv and less than or equal to 800 Hv.

In the above rolling bearing, in a sectional view orthogonal to the contact surface in which the superficial part is formed, a total of greater than or equal to 80 precipitates having a grain size of less than or equal to 0.50 µm exist per 100 µm² in the superficial part, and a total of area fractions of the precipitates in the superficial part may be greater than or equal to 2% and less than or equal to 7%. A volume fraction of retained austenite quantity at a position of 50 µm deep from the contact surface in which the superficial part is formed may be greater than or equal to 25% and less than or equal to 35%. Hardness at a position of 50 µm deep from the contact surface in which the superficial part is formed may be greater than or equal to 653 Hv and less than or equal to 800 Hv.

A rolling bearing according to other aspect of the present invention includes a plurality of balls and two raceway members. The balls and raceway members have contact surfaces. In at least either of balls and raceway members, a superficial part is formed in a region from the contact surface to a depth of 20 µm. Of the balls and the raceway members, the member in which a superficial part is formed in the contact surface is made of steel that has been quenched. Steel contains greater than or equal to 0.70 mass% and less than or equal to 1.10 mass% of carbon, greater than or equal to 0.15 mass% and less than or equal to 0.35 mass% of silicon, greater than or equal to 0.30 mass% and less than or equal to 0.60 mass% of manganese, greater than or equal to 1.30 mass% and less than or equal to 1.60 mass% of chromium, greater than or equal to 0.01 mass% and less than or equal to 0.50 mass% of molybdenum, and greater than or equal to 0.01 mass% and less than or equal to 0.50 mass% of vanadium, and the remainder of iron and inevitable impurities. A content of nitrogen in the superficial part is greater than or equal to 0.2 mass% and less than or equal to 0.8 mass%. The raceway members are an inner ring and an outer ring. The outer diameter of the inner ring and the inner diameter of the outer ring are greater than or equal to a value resulting from subtracting the diameter of the ball from the diameter of the pitch circle diameter of balls, and less than or equal to a value resulting from adding the diameter of the ball to the pitch circle diameter of balls, respectively. Thickness of the outer ring is set so that the tensile stress exerted on the outer ring is less than or equal to 700 MPa. At least either of composite roughness between the first raceway surface which is the contact surface of the inner ring and the rolling surface which is the contact surface of the ball, and composite roughness between the second raceway surface which is the contact surface of the outer ring and the rolling surface is greater than or equal to 0.05 µm. The contact angle of the ball with the first raceway surface and the second raceway surface is less than 30°.

The rolling bearing may be for transmission of vehicle, for auxiliary machinery of vehicle, or for motor of vehicle.

### ADVANTAGEOUS EFFECTS OF INVENTION

According to the rolling bearing according to one aspect of the present invention and the rolling bearing according to other aspect of the present invention, it becomes possible to elongate the life.

### BRIEF DESCRIPTION OF DRAWINGS

Fig. 1 is a sectional view of a rolling bearing 100.
Fig. 2 is a process chart showing a method for producing rolling bearing 100.
Fig. 3 is a graph showing distribution of contents of carbon and nitrogen in superficial parts of an inner ring and an outer ring of a sample 1.
Fig. 4 is a graph showing distribution of contents of carbon and nitrogen in superficial parts of an inner ring and an outer ring of a sample 2.
Fig. 5 is a representative sectional FE-SEM image in the superficial parts of the inner ring and the outer ring of sample 1.
Fig. 6 is a representative sectional FE-SEM image in the superficial parts of the inner ring and the outer ring of sample 2.
Fig. 7 is a graph showing a rolling fatigue life test result.
Fig. 8 is a sectional view of a rolling bearing 100A.

### DESCRIPTION OF EMBODIMENTS

The details of embodiments of the present invention are described by referring to drawings. In the following drawings, the same or the corresponding part is denoted by the same reference numeral and overlapping description is not repeated.

### (Configuration of rolling bearing according to first embodiment)

Hereinafter, configuration of a rolling bearing according to the first embodiment (hereinafter, referred to as "rolling bearing 100") is described. Rolling bearing 100 is, for example, a single-direction thrust ball bearing with flat seats. However, rolling bearing 100 is not limited to this. Rolling bearing 100 is, for example, for transmission of vehicle, for auxiliary machinery of vehicle, or for motor of vehicle.

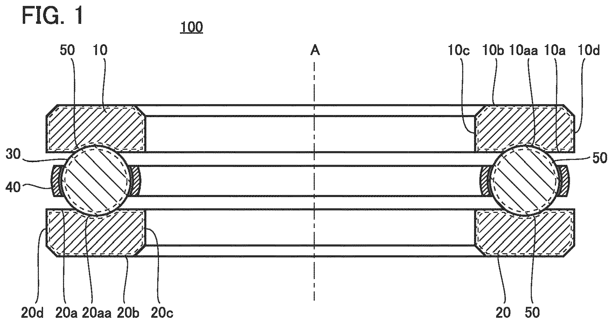

Fig. 1 is a sectional view of rolling bearing 100. As shown in Fig. 1, rolling bearing 100 has a central axis A. Fig. 1 shows a sectional of rolling bearing 100 in a cross section that passes a central axis A and is parallel with central axis A. Rolling bearing 100 has a raceway member (raceway ring or washer), and a rolling element. In rolling bearing 100, the raceway member is an inner ring (shaft washer) 10 and an outer ring (housing washer) 20, and the rolling element is a ball 30. Rolling bearing 100 further has a retainer 40.

Inner ring 10 has an annular (ring-like) shape. Inner ring 10 has a first face 10a, a second face 10b, an inner circumferential face 10c, and an outer circumferential face 10d.

First face 10a and second face 10b constitute end faces in the direction along central axis A (hereinafter, referred to as "axial direction"). Second face 10b is the opposite face of first face 10a in the axial direction. First face 10a has a raceway surface 10aa. First face 10a is recessed toward second face 10b in raceway surface 10aa. In the sectional view, raceway surface 10aa is a partial arc. The diameter of the partial arc is greater than or equal to 1.01 times and less than or equal to 1.08 times the diameter of ball 30. Raceway surface 10aa is a surface that comes into contact with ball 30, and constitutes a contact surface of inner ring 10.

Inner circumferential face 10c is a surface facing to central axis A side. Inner circumferential face 10c connects at one end in the axial direction with first face 10a, and connects at the other end in the axial direction with second face 10b.

Outer circumferential face 10d is a surface facing to the side opposite to central axis A. From other point of view, outer circumferential face 10d is an opposite surface of inner circumferential face 10c in the direction orthogonal to central axis A (hereinafter, referred to as "radial direction"). Outer circumferential face 10d connects at one end in the axial direction with first face 10a, and connects at the other end in the axial direction with second face 10b.

Outer ring 20 has a ring-like shape. Outer ring 20 has a first face 20a, a second face 20b, an inner circumferential face 20c and an outer circumferential face 20d.

First face 20a and second face 20b constitute end faces in the axial direction. Outer ring 20 is arranged such that first face 20a faces with first face 10a. Second face 20b is the opposite face of first face 20a in the axial direction. First face 20a has a raceway surface 20aa. First face 20a is recessed toward second face 20b in raceway surface 20aa. In the sectional view, raceway surface 20aa is a partial arc. The diameter of the partial arc is greater than or equal to 1.01 times and less than or equal to 1.08 times the diameter of ball 30. Raceway surface 20aa is a surface that comes into contact with ball 30, and constitutes a contact surface of outer ring 20.

Inner circumferential face 20c is a surface facing to central axis A side. Inner circumferential face 20c connects at one end in the axial direction with first face 20a, and connects at the other end in the axial direction with second face 20b.

Outer circumferential face 20d is a surface facing to the side opposite to central axis A. That is, outer circumferential face 20d is an opposite face of inner circumferential face 20c in the radial direction. Outer circumferential face 20d connects at one end in the axial direction with first face 20a, and connects at the other end in the axial direction with second face 20b.

Ball 30 has a globular shape. There are a plurality of balls 30. Ball 30 is arranged between first face 10a and first face 20a. More specifically, ball 30 is arranged between raceway surface 10aa and raceway surface 20aa. Ball 30 comes into contact with raceway surface 10aa and raceway surface 20aa on the surface of ball 30. That is, the surface of ball 30 is a contact surface (rolling surface).

Retainer 40 retains ball 30. Retainer 40 retains ball 30 such that an interval of two neighboring balls 30 falls within a certain range in the direction along the circumference about central axis A (hereinafter, referred to as "circumferential direction").

### <Steel used in raceway member and rolling element>

Inner ring 10, outer ring 20 and ball 30 are formed of steel having a composition shown in Table 1 (hereinafter, referred to as "first composition"). Inner ring 10, outer ring 20 and ball 30 may be formed of steel having a composition shown in Table 2 (hereinafter, referred to as "second composition"). Steel that forms inner ring 10, outer ring 20 and ball 30 is quenched. It is only required that at least one of inner ring 10, outer ring 20 or ball 30 is formed of steel of the first composition (second composition).

### [Table 1]

**Table 1**

| C | Si | Mn | Cr | Mo | V | Remainder |
|---|---|---|---|---|---|---|
| Greater than or equal to 0.70 and less than or equal to 1.10 | Greater than or equal to 0.15 and less than or equal to 0.35 | Greater than or equal to 0.30 and less than or equal to 0.60 | Greater than or equal to 1.30 and less than or equal to 1.60 | Greater than or equal to 0.01 and less than or equal to 0.50 | Greater than or equal to 0.01 and less than or equal to 0.50 | Fe and inevitable impurity |

| | | | | | | |
|---|---|---|---|---|---|---|
| Unit: mass% | | | | | | |

### [Table 2]

**Table 2**

| C | Si | Mn | Cr | Mo | V | Remainder |
|---|---|---|---|---|---|---|
| Greater than or equal to 0.90 and less than or equal to 1.10 | Greater than or equal to 0.20 and less than or equal to 0.30 | Greater than or equal to 0.40 and less than or equal to 0.50 | Greater than or equal to 1.40 and less than or equal to 1.60 | Greater than or equal to 0.20 and less than or equal to 0.30 | Greater than or equal to 0.20 and less than or equal to 0.30 | Fe and inevitable impurity |

| | | | | | | |
|---|---|---|---|---|---|---|
| Unit: mass% | | | | | | |

Carbon (C) influences on the hardness of the contact surface (raceway surface 10aa, raceway surface 20aa and surface of ball 30) after quenching. If the content of carbon in steel is less than 0.70 mass%, it is difficult to secure sufficient hardness in the contact surface. Also, if the content of carbon in steel is less than 0.70 mass%, it is necessary to supplement the carbon content in the surface by a carburizing treatment or the like. This results in deterioration in production efficiency and increase in production cost. If the content of carbon in steel is greater than 1.10 mass%, a crack at the time of quenching (quenching crack) can be generated. Therefore, in the steel of the first composition, the content of carbon is set to be greater than or equal to 0.70 mass% and less than or equal to 1.10 mass%.

Silicon is added for deoxidation at the time of refining of steel and securement of workability before a nitriding treatment. If the content of silicon in steel is less than 0.15 mass%, resistance to temper softening is insufficient. As a result, hardness of the contact surface can deteriorate due to temperature rise at the time of tempering after quenching or during use of rolling bearing 100. If the content of silicon in steel is greater than 0.35 mass%, the steel is too hard, and the tool life of the cutting tool used in machining inner ring 10 (outer ring 20, ball 30) can be shortened. Also, in this case, the material cost of steel increases. Therefore, in the steel of the first composition, the content of silicon is set to be greater than or equal to 0.15 mass% and less than or equal to 0.35 mass%.

Manganese is added to secure the hardenability and hardness of steel. If the content of manganese in steel is less than 0.30 mass%, it is difficult to secure the hardenability and the hardness of steel. If the content of manganese in steel is greater than 0.60 mass%, the steel is too hard, and the tool life of the cutting tool used in machining inner ring 10 (outer ring 20, ball 30) can be shortened. Also, in this case, the material cost of steel increases. Therefore, in the steel of the first composition, the content of manganese is set to be greater than or equal to 0.30 mass% and less than or equal to 0.60 mass%.

Chromium is added to secure the hardenability of steel, and to secure the hardness by forming fine precipitates in association with a nitriding treatment. If the content of chromium in steel is less than 1.30 mass%, it is difficult to secure the hardenability and the hardness of steel. If the content of chromium in steel is greater than 1.60 mass%, precipitates become coarse, and can be an origin of a fatigue failure. Also, in this case, the material cost of steel increases. Therefore, in the steel of the first composition, the content of chromium is set to be greater than or equal to 1.30 mass% and less than or equal to 1.60 mass%.

Molybdenum is added to secure the hardenability of steel, and to secure the hardness by forming fine precipitates in association with a nitriding treatment. Since molybdenum has strong affinity with carbon, it precipitates as undissolved carbide in steel at the time of a nitriding treatment. Since the undissolved carbide of molybdenum serves as a precipitation core at the time of quenching, molybdenum increases the quantity of precipitates after quenching.

If the content of molybdenum in steel is less than 0.01 mass%, it is difficult to secure the hardenability and the hardness of steel. If the content of molybdenum in steel is greater than 0.50 mass%, precipitates become coarse, and can be an origin of a fatigue failure. In this case, the material cost of steel also increases. Therefore, in the steel of the first composition, the content of molybdenum is set to be greater than or equal to 0.01 mass% and less than or equal to 0.50 mass%.

Vanadium is added to secure the hardenability of steel, and to secure the hardness by forming fine precipitates in association with a nitriding treatment. If the content of vanadium in steel is less than 0.01 mass%, it is difficult to secure the hardenability and the hardness of steel. If the content of vanadium in steel is greater than 0.50 mass%, precipitates become coarse, and can be an origin of a fatigue failure. In this case, the material cost of steel also increases. Therefore, in the steel of the first composition, the content of vanadium is set to be greater than or equal to 0.01 mass% and less than or equal to 0.50 mass%.

### <Superficial part 50>

As shown in Fig. 1, inner ring 10, outer ring 20 and ball 30 have a superficial part 50 in their surfaces. Superficial part 50 is a region up to a depth of 20 µm from the surface of inner ring 10, outer ring 20 and ball 30. It is only required that superficial part 50 is formed in the contact surface of at least inner ring 10, outer ring 20 and ball 30. Also, it is only required that superficial part 50 is formed in at least one of inner ring 10, outer ring 20 or ball 30.

Superficial part 50 is a part formed by a nitriding treatment. The content of nitrogen in superficial part 50 is greater than or equal to 0.2 mass% and less than or equal to 0.8 mass%. If the content of nitrogen in superficial part 50 is less than 0.2 mass%, it is difficult to secure the durability of the contact surface. If the content of nitrogen in superficial part 50 is greater than 0.8 mass%, the time required for the nitriding treatment elongates, and the production cost increases. Therefore, the content of nitrogen in superficial part 50 is set to be greater than or equal to 0.2 mass% and less than or equal to 0.8 mass%. It is preferred that the content of nitrogen in superficial part 50 is greater than or equal to 0.3 mass% and less than or equal to 0.5 mass%.

The content of nitrogen in superficial part 50 is measured by an electron probe micro analyzer (EPMA).

In the sectional view orthogonal to the contact surface, it is preferred that a total of greater than or equal to 60 precipitates having a grain size of less than or equal to 0.5 µm exist per 100 µm² in superficial part 50. In the sectional view orthogonal to the contact surface, it is further preferred that a total of greater than or equal to 80 precipitates having a grain size of less than or equal to 0.5 µm exist per 100 µm² in superficial part 50.

Also, in the sectional view orthogonal to the contact surface, it is preferred that a total of area fractions of precipitates in superficial part 50 is greater than or equal to 1% and less than or equal to 10%. In the sectional view orthogonal to the contact surface, it is further preferred that a total of area fractions of precipitates in superficial part 50 is greater than or equal to 2% and less than or equal to 7%.

Precipitates in superficial part 50 are, for example, carbonitrides and nitrides. Carbonitrides include carbides of iron, carbides of iron in which carbon is substituted by nitrogen, and carbides of iron in which iron is substituted by an alloy element other than iron. Nitrides are nitrides of iron. Precipitates in superficial part 50 may be carbides, carbonitrides or nitrides of an alloy element contained in steel.

An area fraction of precipitate is calculated by acquiring a sectional image of superficial part 50 at a magnification of 5000 times using a Field Emission Scanning Electron Microscope (FE-SEM), binarizing the sectional image, and conducting an image processing for the binarized sectional image. The sectional image of superficial part 50 is acquired in greater than or equal to three fields of view, and the area fraction is an average value of the plurality of sectional images.

A grain size of each precipitate is obtained by acquiring an area of each precipitate in the same manner as described above, and multiplying a square root of the value obtained by dividing the acquired area by π, by 2.

### <Retained austenite quantity in steel>

It is preferred that a volume fraction of retained austenite in steel that forms inner ring 10, outer ring 20 and ball 30 is greater than or equal to 20% and less than or equal to 40% at a position of 50 µm deep from the contact surface. As a result, it is possible to improve the durability of the contact surface (especially, durability of the contact surface under a contaminated environment). If the volume fraction of retained austenite is less than 25%, the durability of the contact surface can be insufficient. If the volume fraction of retained austenite is greater than 35%, there is a fear for aged deterioration in association with decomposition of retained austenite.

It is further preferred that a volume ratio of retained austenite in steel that forms inner ring 10, outer ring 20 and ball 30 is greater than or equal to 25% and less than or equal to 35% at a position of 50 µm deep from the contact surface.

A retained austenite quantity in steel at a position of 50 µm deep from the contact surface is measured by an X-ray diffraction method. More specifically, a retained austenite quantity in steel at a position of 50 µm deep from the contact surface is measured by using an MSF-3M available from Rigaku Corporation.

### <Hardness at position where depth from contact surface is to be 50 µm>

It is preferred that hardness at a position where the depth from the contact surface of inner ring 10, outer ring 20 and ball 30 is to be 50 µm is greater than or equal to 653 Hv and less than or equal to 800 Hv. If the hardness at a position where the depth from the contact surface is to be 50 µm is less than 653 Hv, durability of the contact surface can be insufficient. On the other hand, if hardness at a position where the depth from the contact surface is to be 50 µm is greater than 800 Hv, ductility and tenacity can deteriorate and early damage can be generated.

Hardness at a position where the depth from the contact surface of inner ring 10, outer ring 20 and ball 30 is to be 50 µm is measured by a Vickers hardness test method defined in JIS standard (JIS Z 2244:2009). The load at the time of measurement is set at 300 gf.

### <Martensite block in superficial part 50>

Steel of superficial part 50 has martensite block grains. Neighboring two martensite block grains have a difference in crystal orientation in the grain boundary of greater than or equal to 15°. From another perspective, even if there is a location where crystal orientation deviates, the location is not regarded as a crystal grain boundary of martensite block grains as long as the difference in crystal orientation is less than 15°. A grain boundary of martensite block grains is determined by an EBSD (Electron Back Scattered Diffraction) method.

In steel of superficial part 50, an average grain size of martensite block grains at a comparison area fraction of 30% is less than or equal to 2.0 µm. In steel of superficial part 50, it is preferred that an average grain size of martensite block grains at a comparison area fraction of 50% is less than or equal to 1.5 µm.

An average grain size of martensite block grains at a comparison area fraction of 30% (50%) is measured in the following method. First, in a cross section of inner ring 10 including superficial part 50, the cross section is observed. At this time, by the EBSD method, martensite block grains contained in the observation field are determined. This observation field is a region of 50 µm × 35 µm. Second, from the crystal orientation data obtained by the EBSD method, respective areas of the martensite block grains contained in the observation field are analyzed.

Third, respective areas of the martensite block grains contained in the observation field are added up in descending order of area. The addition is performed until the 30% (50%) of the total area of the martensite block grains contained in the observation field is reached. For each of the martensite block grains that are objects of the addition, an equivalent circle diameter is calculated. The equivalent circle diameter is a square root of a value obtained by dividing the area of the martensite block grain by π/4. An average value of equivalent circle diameters of martensite block grains that are objects of the addition is regarded as an average grain size of martensite block grains at a comparison area fraction of 30% (50%).

### (Method for producing rolling bearing according to first embodiment)

Hereinafter, a method for producing rolling bearing 100 is described.

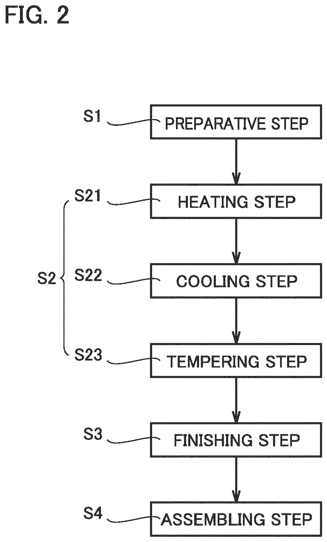

Fig. 2 is a process chart showing a method for producing rolling bearing 100. As shown in Fig. 2, the method for producing rolling bearing 100 has a preparative step S1, a heat treatment step S2, a finishing step S3, and an assembling step S4. Heat treatment step S2 is conducted after preparative step S1. Finishing step S3 is conducted after heat treatment step S2. Assembling step S4 is conducted after finishing step S3.

In preparative step S1, a workpiece to be subjected to heat treatment step S2 and finishing step S3 is prepared. As the workpiece, a ring-shaped member is prepared when inner ring 10 and outer ring 20 are intended to be formed, and a globular member is prepared when ball 30 is intended to be formed. The workpiece is formed of steel having a first composition or a second composition.

Heat treatment step S2 has a heating step S21, a cooling step S22, and a tempering step S23. In heating step S21, the workpiece is retained at a temperature of greater than or equal to A₁ transformation point for a predetermined time. In heating step S21, a nitriding treatment for the workpiece is also conducted. The nitriding treatment is performed by conducting the heating and retaining in the atmospheric gas containing a gas that is a source of nitrogen (for example, ammonia gas).

Cooling step S22 is conducted after heating step S21. In cooling step S22, the workpiece is cooled to a temperature of less than or equal to Ms transformation point. The cooling is carried out, for example, by oil cooling. The tempering step S23 is conducted after cooling step S22. In tempering step S23, the workpiece is retained at a temperature of less than A₁ transformation point for a predetermined time.

In finishing step S3, finishing (grinding, polishing) and washing are conducted for the workpiece. In this manner, inner ring 10, outer ring 20 and ball 30 are prepared. In assembling step S4, inner ring 10, outer ring 20 and ball 30 are assembled together with retainer 40. Thus, rolling bearing 100 having the structure shown in Fig. 1 is produced.

### (Effect of rolling bearing according to first embodiment)

Hereinafter, an effect of rolling bearing 100 is described.

In rolling bearing 100, since superficial part 50 having subjected to a nitriding treatment is formed in the contact surface of inner ring 10, outer ring 20 and ball 30, a damage such as crack is difficult to be generated in the contact surface (and directly under the contact surface). Also, in rolling bearing 100, since inner ring 10, outer ring 20 and ball 30 are formed of steel having the first composition or the second composition, the hardness in the contact surface (and directly under the contact surface) can be secured, for example, by precipitation of fine precipitates in superficial part 50, and the precipitates can be prevented from becoming a stress concentration source (becoming an origin of generation of a crack). In this manner, according to rolling bearing 100, it is possible to elongate the life of the rolling bearing.

In rolling bearing 100, since fine precipitates precipitate in superficial part 50, and the hardness of the contact surface is secured, formation of newly generated metal surface in the contact surface is prevented. Therefore, in rolling bearing 100, hydrogen is difficult to be generated in the contact surface. Also, in rolling bearing 100, a fine precipitate precipitates in superficial part 50, and the vicinity of the precipitate serves as a trap site of hydrogen, so that the hydrogen penetration quantity in superficial part 50 decreases. Therefore, in rolling bearing 100, an early flaking damage caused by hydrogen brittleness is difficult to occur. In this manner, according to rolling bearing 100, it is possible to elongate the life of the rolling bearing.

In rolling bearing 100, since the diameter of the partial arc of raceway surface 10aa (raceway surface 20aa) is less than or equal to 1.08 times the diameter of ball 30, it is possible to decrease the contact surface pressure between raceway surface 10aa (raceway surface 20aa) and ball 30, and oil film breakage becomes less likely to occur between raceway surface 10aa (raceway surface 20aa) and ball 30. Therefore, in rolling bearing 100, abrasion in the contact surface, and thus formation of a metal newly generated surface on the contact surface are suppressed, and early peeling and damage caused by hydrogen brittleness becomes less likely to occur.

Also, in rolling bearing 100, since the diameter of the partial arc of raceway surface 10aa (raceway surface 20aa) is greater than or equal to 1.01 times the diameter of ball 30, the contact area between raceway surface 10aa (raceway surface 20aa) and ball 30 is not too small, and the torque loss of rolling bearing 100 can be suppressed. In this manner, in rolling bearing 100, it is possible to keep the bearing characteristics (torque loss) while forming an appropriate oil film.

In steel of superficial part 50, when the martensite block grains are fined so that the average grain size at a comparison area fraction of 30% is less than or equal to 2.0 µm, the shear resistance of the contact surface (specifically, raceway surface 10da, raceway surface 20ca and surface of ball 30) is improved by increased toughness of the superficial part 50. Therefore, in this case, the durability of rolling bearing 100 can be further improved.

### (Example of rolling bearing according to first embodiment)

Hereinafter, Examples of rolling bearing 100 are described.

### <Sample>

As samples of rolling bearing, a sample 1, a sample 2 and a sample 3 were prepared. Sample 1, sample 2 and sample 3 are single-direction thrust ball bearings of the model number 51106 in JIS standard having an inner diameter of 30 mm, an outer diameter of 47 mm and a width of 11 mm.

The inner ring and the outer ring of sample 1 were formed of steel having a composition shown in Table 3. The composition shown in Table 3 falls in the ranges of the first composition and the second composition. The inner ring and the outer ring of sample 2, and the inner ring and the outer ring of sample 3 were formed of steel having a composition shown in Table 4. The composition shown in Table 4 falls in the composition of SUJ2 defined in JIS standard, and falls outside the ranges of the first composition and the second composition. Balls of sample 1, sample 2 and sample 3 were formed of stainless steel (SUS440C).

### [Table 3]

**Table 3**

| C | Si | Mn | Cr | Mo | V | Remainder |
|---|---|---|---|---|---|---|
| 1.00 | 0.26 | 0.44 | 1.51 | 0.24 | 0.24 | Fe and inevitable impurity |

| | | | | | | |
|---|---|---|---|---|---|---|
| Unit: mass% | | | | | | |

### [Table 4]

**Table 4**

| C | Si | Mn | Cr | Mo | V | Remainder |
|---|---|---|---|---|---|---|
| 0.99 | 0.26 | 0.44 | 1.51 | 0.00 | 0.00 | Fe and inevitable impurity |

| | | | | | | |
|---|---|---|---|---|---|---|
| Unit: mass% | | | | | | |

The inner ring and the outer ring of sample 1, and the inner ring and the outer ring of sample 2 were subjected to heat treatment step S2. The inner ring and the outer ring of sample 3 are not subjected to heat treatment step S2. More specifically, for the inner ring and the outer ring of sample 3, quenching and tempering are conducted, however, nitriding treatment is not conducted.

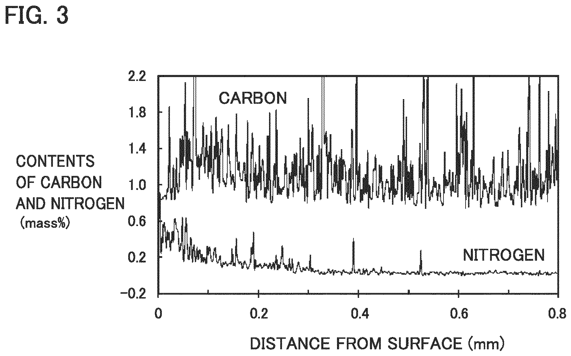

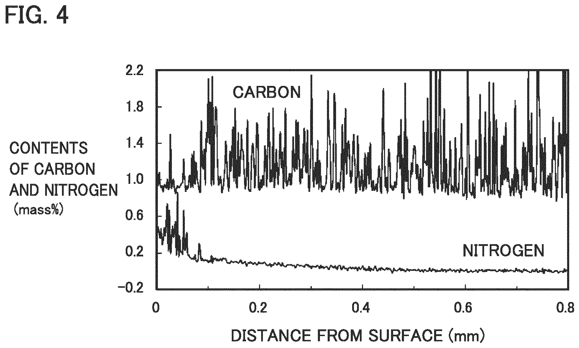

Fig. 3 is a graph showing distribution of contents of carbon and nitrogen in superficial parts of the inner ring and the outer ring of sample 1. Fig. 4 is a graph showing distribution of contents of carbon and nitrogen in superficial parts of the inner ring and the outer ring of sample 2. In Fig. 3 and Fig. 4, the horizontal axis indicates a distance from the surface (unit: mm), and the vertical axis indicates contents of carbon and nitrogen (unit: mass%). As shown in Fig. 3, Fig. 4 and Table 5, contents of nitrogen in the superficial parts in the inner ring and the outer ring of sample 1 and in the inner ring and the outer ring of sample 2 were greater than or equal to 0.3 mass% and less than or equal to 0.5 mass%. On the other hand, as shown in Table 5, contents of nitrogen in the superficial parts in the inner ring and the outer ring of sample 3 were 0 mass% (nitrogen was not contained).

As shown in Table 5, in the superficial parts in the inner ring and the outer ring of sample 1, a total of area fractions of precipitates was greater than or equal to 2.2% and less than or equal to 7.0%. In the superficial parts in the inner ring and the outer ring of sample 2, a total of area fractions of precipitates was greater than or equal to 1.2% and less than or equal to 4.0%. In the superficial parts in the inner ring and the outer ring of sample 3, a total of area fractions of precipitates was greater than or equal to 0.07% and less than or equal to 0.24%.

As shown in Table 5, in the superficial parts in the inner ring and the outer ring of sample 1, the number of precipitates was greater than or equal to 66 and less than or equal to 425 in total per 100 µm². In the superficial parts in the inner ring and the outer ring of sample 2, the number of precipitates was greater than or equal to 29 and less than or equal to 81 in total per 100 µm². In the superficial parts in the inner ring and the outer ring of sample 3, the number of precipitates was greater than or equal to 8 and less than or equal to 50 in total per 100 µm².

### [Table 5]

**Table 5**

| | Content of nitrogen in superficial part (mass%) | Area fraction of precipitate (%) | Number of precipitates per 100 µm² (number) |
|---|---|---|---|
| Inner ring and outer ring of sample 1 | Greater than or equal to 0.3 and less than or equal to 0.5 | Greater than or equal to 2.2 and less than or equal to 7.0 | Greater than or equal to 66 and less than or equal to 425 |
| Inner ring and outer ring of sample 2 | Greater than or equal to 0.3 and less than or equal to 0.5 | Greater than or equal to 1.2 and less than or equal to 4.0 | Greater than or equal to 29 and less than or equal to 81 |
| Inner ring and outer ring of sample 3 | 0 | Greater than or equal to 0.07 and less than or equal to 0.24 | Greater than or equal to 8 and less than or equal to 50 |

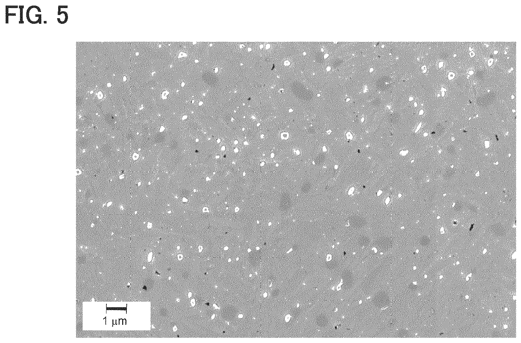

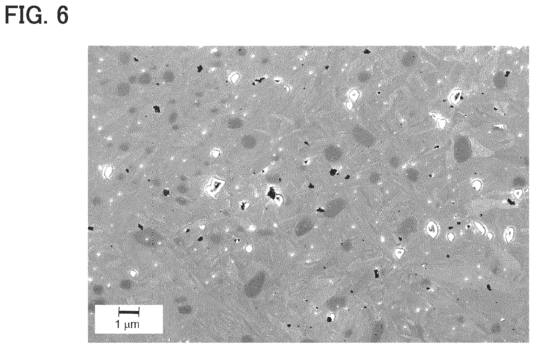

Fig. 5 is a representative sectional FE-SEM image in the superficial parts of the inner ring and the outer ring of sample 1. Fig. 6 is a representative sectional FE-SEM image in the superficial parts of the inner ring and the outer ring of sample 2. As shown in Fig. 5, in the superficial parts of the inner ring and the outer ring of sample 1, precipitates were fined (most of precipitates had a grain size of less than or equal to 0.5 µm). On the other hand, as shown in Fig. 6, in the superficial parts of the inner ring and the outer ring of sample 2, precipitates were not fined (most of precipitates had a grain size of greater than 0.5 µm).

As shown in Table 6, a volume ratio of retained austenite at a position where the depth from the contact surface of the inner ring and the outer ring of sample 1 is to be 50 µm was greater than or equal to 29.8% and less than or equal to 30.8%. A volume ratio of retained austenite at a position where the depth from the contact surface of the inner ring and the outer ring of sample 2 is to be of 50 µm was greater than or equal to 30.2% and less than or equal to 31.4%. A volume ratio of retained austenite at a position where the depth from the contact surface of the inner ring and the outer ring of sample 3 is to be of 50 µm was greater than or equal to 9.7% and less than or equal to 11.5%.

As shown in Table 6, hardness at a position where the depth from the contact surface of the inner ring and the outer ring of sample 1 is to be 50 µm was greater than or equal to 755 Hv and less than or equal to 759 Hv. Hardness at a position where the depth from the contact surface of the inner ring and the outer ring of sample 2 is to be 50 µm was greater than or equal to 749 Hv and less than or equal to 758 Hv. Hardness at a position where the depth from the contact surface of the inner ring and the outer ring of sample 3 is to be 50 µm was greater than or equal to 735 Hv and less than or equal to 765 Hv.

### [Table 6]

**Table 6**

| | Volume fraction of retained austenite at position of 50 µm deep from contact surface (%) | Hardness at position of 50 µm deep from contact surface (Hv) |
|---|---|---|
| Inner ring and outer ring of sample 1 | Greater than or equal to 29.8 and less than or equal to 30.8 | Greater than or equal to 755 and less than or equal to 759 |
| Inner ring and outer ring of sample 2 | Greater than or equal to 30.2 and less than or equal to 31.4 | Greater than or equal to 749 and less than or equal to 758 |
| Inner ring and outer ring of sample 3 | Greater than or equal to 9.7 and less than or equal to 11.5 | Greater than or equal to 735 and less than or equal to 765 |

### <Rolling fatigue life test>

A rolling fatigue life test was conducted for sample 1, sample 2 and sample 3. As shown in Table 7, the rolling fatigue life test was conducted under the conditions of a maximum contact surface pressure of 2.3 GPa, rapid acceleration and deceleration between 0 rpm (revolutions per minute) and 2500 rpm, and lubrication with a mixture of polyglycol and pure water.

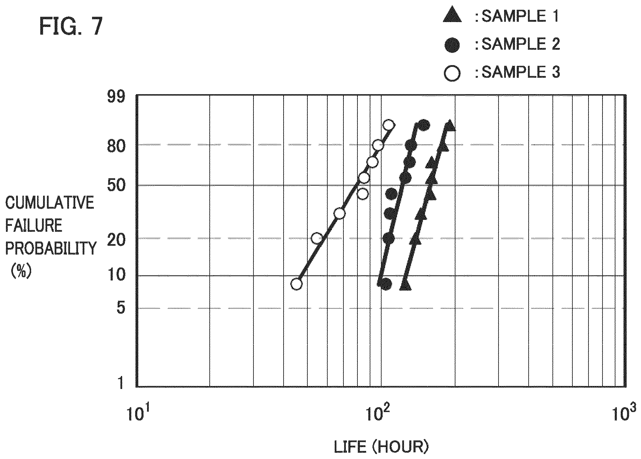

Fig. 7 is a graph showing a rolling fatigue life test result. In Fig. 7, the horizontal axis indicates life (unit: hr), and the vertical axis indicates cumulative failure probability (unit: %). As shown in Fig. 7 and Table 7, comparison in L₁₀ life (the time at which the cumulative failure probability reaches 10%) revealed that the rolling fatigue life of sample 2 was longer than the rolling fatigue life of sample 3. The comparison result experimentally demonstrated that the rolling fatigue life is improved by performing a nitriding treatment so that the content of nitrogen in superficial part 50 is greater than or equal to 0.2 mass% and less than or equal to 0.8 mass%.

As shown in Fig. 7 and Table 7, comparison in L₁₀ life revealed that the rolling fatigue life of sample 1 was longer than the rolling fatigue life of sample 2. The comparison result experimentally demonstrated that by forming at least one of inner ring 10, outer ring 20 or ball 30 of steel having the first composition, precipitates are finely dispersed in superficial part 50, and the rolling fatigue life is improved.

### [Table 7]

**Table 7**

| | L₁₀ life |
|---|---|
| Sample 1 | 2.7 times as compared with sample 3 |
| Sample 2 | 2.1 times as compared with sample 3 |

### <Hydrogen penetration property>

Hydrogen penetration property into superficial parts of raceway members (inner ring and outer ring) of sample 1 and sample 3 was evaluated by the following method. In this evaluation, first, by heating raceway members of sample 1 and sample 3 before being subjected to the rolling fatigue life test to 400°C from the room temperature, hydrogen release amounts from the raceway members of sample 1 and sample 3 before being subjected to the rolling fatigue life test were measured. Secondly, by heating raceway members of sample 1 and sample 3 after being subjected to the rolling fatigue life test for 50 hours to 400°C from the room temperature, hydrogen release amounts from the raceway members of sample 1 and sample 3 after being subjected to the rolling fatigue life test for 50 hours were measured.

In sample 3, the ratio of hydrogen release amount before and after the rolling fatigue life test (namely, the value obtained by dividing the hydrogen release amount after being subjected to the rolling fatigue life test by the hydrogen release amount before being subjected to the rolling fatigue life test) was 3.2. On the other hand, in sample 1, the ratio of hydrogen release amount before and after the rolling fatigue life test was 0.9. This comparison experimentally revealed that by formation of superficial part 50 in the contact surface, penetration of hydrogen into superficial part 50 is prevented, and early flaking caused by hydrogen brittleness is prevented.

### (Configuration of rolling bearing according to second embodiment)

Hereinafter, configuration of a rolling bearing according to the second embodiment (hereinafter, referred to as "rolling bearing 100A") is described.

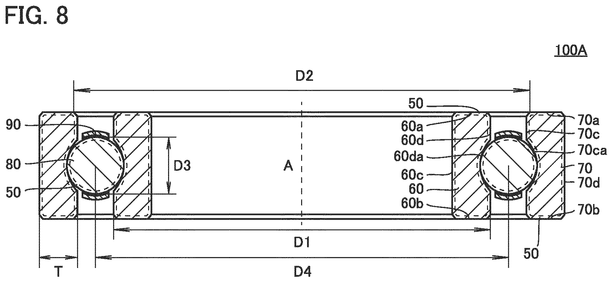

Fig. 8 is a sectional view of a rolling bearing 100A. Fig. 8 shows a sectional of rolling bearing 100A in a cross section that passes a central axis A and is parallel with central axis A. As shown in Fig. 8, rolling bearing 100A has a raceway member, and a rolling element. In rolling bearing 100A, the raceway member and the rolling element have superficial part 50 in their surfaces. In rolling bearing 100A, the raceway member and the rolling element are formed of the steel of the first composition or the steel of the second composition. In these respects, the configuration of rolling bearing 100A is common to the configuration of rolling bearing 100.

Rolling bearing 100A is, for example, a deep groove ball bearing. However, rolling bearing 100A may be an angular ball bearing. The raceway members of rolling bearing 100A are an inner ring 60 and an outer ring 70. The rolling element of rolling bearing 100A is a ball 80. Rolling bearing 100A further has a retainer 90.

Inner ring 60 has a ring-like shape. Inner ring 60 has a first face 60a, a second face 60b, an inner circumferential face 60c, and an outer circumferential face 60d.

First face 60a and second face 60b constitute end faces of inner ring 60 in the axial direction. Second face 60b is an opposite face of first face 60a.

Inner circumferential face 60c is a surface facing to central axis A side. Inner circumferential face 60c connects at one end in the axial direction with first face 60a, and connects at the other end in the axial direction with second face 60b. Outer circumferential face 60d is a surface facing to the side opposite to central axis A. That is, outer circumferential face 60d is an opposite face of inner circumferential face 60c in the radial direction. Outer circumferential face 60d connects at one end in the axial direction with first face 60a, and connects at the other end in the axial direction with second face 60b.

Outer circumferential face 60d has a raceway surface 60da. Outer circumferential face 60d is recessed toward inner circumferential face 60c in raceway surface 60da. In the sectional view, raceway surface 60da is a partial arc. Raceway surface 60da is a surface that comes into contact with ball 80, and constitutes a contact surface of inner ring 60.

Outer ring 70 has a ring-like shape. Outer ring 70 has a first face 70a, a second face 70b, an inner circumferential face 70c and an outer circumferential face 70d. Outer ring 70 is arranged such that inner circumferential face 70c faces with outer circumferential face 60d.

First face 70a and second face 70b constitute end faces of outer ring 70 in the axial direction. Second face 70b is an opposite face of first face 70a.

Inner circumferential face 70c is a surface facing to central axis A side. Inner circumferential face 70c connects at one end in the axial direction with first face 70a, and connects at the other end in the axial direction with second face 70b. Outer circumferential face 70d is a surface facing to the side opposite to central axis A. That is, outer circumferential face 70d is an opposite face of inner circumferential face 70c in the radial direction. Outer circumferential face 70d connects at one end in the axial direction with first face 70a, and connects at the other end in the axial direction with second face 70b.

Inner circumferential face 70c has a raceway surface 70ca. Inner circumferential face 70c is recessed toward outer circumferential face 70d in raceway surface 70ca. In the sectional view, raceway surface 70ca is a partial arc. Raceway surface 70ca is a surface that comes into contact with ball 80, and constitutes a contact surface of outer ring 70.

Ball 80 has a globular shape. There are a plurality of balls 80. Ball 80 is arranged between outer circumferential face 60d and inner circumferential face 70c. More specifically, ball 80 is arranged between raceway surface 60da and raceway surface 70ca. Ball 80 comes into contact with raceway surface 60da and raceway surface 70ca on the surface of ball 80. That is, the surface of ball 80 is a contact surface (rolling surface). Retainer 90 retains ball 80. Retainer 90-retains ball 80 such that an interval between two balls 80 neighboring in the circumferential direction falls within a certain range.

The outer diameter of inner ring 60 is referred to as outer diameter D1. The inner diameter of outer ring 70 is referred to as inner diameter D2. The diameter of ball 80 is referred to as diameter D3. The pitch circle diameter of balls 80 is referred to as pitch circle diameter D4. The pitch circle diameter is the diameter of the circle that passes through the centers of balls 80 aligned along the circumferential direction. Outer diameter D1 is greater than or equal to a value resulting from subtracting 0.7 times diameter D3 from pitch circle diameter D4. Inner diameter D2 is less than or equal to a value resulting from adding 0.7 times diameter D3 to pitch circle diameter D4.

The thickness of outer ring 70 is referred to as thickness T. Thickness T is set so that the tensile stress exerted on outer ring 70 is less than or equal to 700 MPa. Composite roughness of raceway surface 60da and the rolling surface of ball 80, and composite roughness of raceway surface 70ca and the rolling surface of ball 80 are less than or equal to 0.05 µm. Composite roughness of raceway surface 60da (raceway surface 70ca) and the rolling surface of ball 80 is calculated by {(R₁ × 1.25)² + (R₂ × 1.25)²}^{1/2}, wherein Ri represents arithmetic mean roughness of raceway surface 60da (raceway surface 70ca) and R₂ represents arithmetic mean roughness of the rolling surface of ball 80.

The contact angle of ball 80 with raceway surface 60da and raceway surface 70ca is 0°. However, when rolling bearing 100A is an angular ball bearing, the contact angle of ball 80 with raceway surface 60da and raceway surface 70ca is less than 30°.

### (Effect of rolling bearing according to second embodiment)

Hereinafter, an effect of rolling bearing 100A is described.

In rolling bearing 100A, superficial part 50 is formed in contact surfaces of inner ring 60, outer ring 70 and ball 80. Also, in rolling bearing 100A, inner ring 10, outer ring 20 and ball 30 are formed of the steel of the first composition or the second composition. Therefore, according to rolling bearing 100A, it is possible to elongate the life of the rolling bearing likewise rolling bearing 100.

While embodiments of the present invention have been described, the above-described embodiments may be modified in various ways. The scope of the present invention is not limited to the above-described embodiments. The scope of the present invention is indicated by the appended claims, and is intended to include all modifications within the equivalent meaning and scope of the claims.

### INDUSTRIAL APPLICABILITY

The above-described embodiments are applied especially advantageously to raceway members such as an inner ring, an outer ring and the like, rolling elements such as a ball, and rolling bearings using the same.

### REFERENCE SIGNS LIST

100: rolling bearing, A: central axis, 10: inner ring, 10a: first face, 10aa: raceway surface, 10b: second face, 10c: inner circumferential face, 10d: outer circumferential face, 20: outer ring, 20a: first face, 20aa: raceway surface, 20b: second face, 20c: inner circumferential face, 20d: outer circumferential face, 30: ball, 40: retainer, 50: superficial part, 100A: rolling bearing, 60: inner ring, 60a: first face, 60b: second face, 60c: inner circumferential face, 60d: outer circumferential face, 60da: raceway surface, 70: outer ring, 70a: first face, 70b: second face, 70c: inner circumferential face, 70ca: raceway surface, 70d: outer circumferential face, 80: ball, 90: retainer, D1: outer diameter, D2: inner diameter, D3: diameter, D4: pitch circle diameter, S1: preparative step, S2: heat treatment step, S3: finishing step, S4: assembling step, S21: heating step, S22: cooling step, S23: tempering step, T: thickness

## Claims

1. A rolling bearing comprising:
a plurality of balls; and
two raceway members,
the balls and the raceway members having a contact surface,
at least either of the balls and the raceway members having a superficial part formed in a region from the contact surface to a depth of 20 µm,
a member in which the superficial part is formed in the contact surface among the balls and the raceway members being made of steel that has been quenched,
the steel containing greater than or equal to 0.70 mass% and less than or equal to 1.10 mass% of carbon, greater than or equal to 0.15 mass% and less than or equal to 0.35 mass% of silicon, greater than or equal to 0.30 mass% and less than or equal to 0.60 mass% of manganese, greater than or equal to 1.30 mass% and less than or equal to 1.60 mass% of chromium, greater than or equal to 0.01 mass% and less than or equal to 0.50 mass% of molybdenum, and greater than or equal to 0.01 mass% and less than or equal to 0.50 mass% of vanadium, and a remainder of iron and inevitable impurities,
a content of nitrogen in the superficial part being greater than or equal to 0.2 mass% and less than or equal to 0.8 mass%,
a raceway surface which is the contact surface of the raceway member being a partial arc in a sectional view that passes a central axis of the rolling bearing and is parallel with the central axis,
a diameter of the partial arc being greater than or equal to 1.01 times a diameter of the ball and less than or equal to 1.08 times the diameter of the ball.

2. The rolling bearing according to claim 1, wherein
the steel contains greater than or equal to 0.90 mass% and less than or equal to 1.10 mass% of carbon, greater than or equal to 0.20 mass% and less than or equal to 0.30 mass% of silicon, greater than or equal to 0.40 mass% and less than or equal to 0.50 mass% of manganese, greater than or equal to 1.40 mass% and less than or equal to 1.60 mass% of chromium, greater than or equal to 0.20 mass% and less than or equal to 0.30 mass% of molybdenum, and greater than or equal to 0.20 mass% and less than or equal to 0.30 mass% of vanadium, and the remainder of iron and inevitable impurities, and
the content of nitrogen in the superficial part is greater than or equal to 0.3 mass% and less than or equal to 0.5 mass%.

3. The rolling bearing according to claim 1 or claim 2, wherein
in a sectional view that is orthogonal to the contact surface in which the superficial part is formed, a total of greater than or equal to 60 precipitates having a grain size of less than or equal to 0.50 µm exist per 100 µm² in the superficial part, and a total of area fractions of precipitates in the superficial part is greater than or equal to 1% and less than or equal to 10%,
a volume fraction of retained austenite quantity at a position of 50 µm deep from the contact surface in which the superficial part is formed is greater than or equal to 20% and less than or equal to 40%, and
hardness at a position of 50 µm deep from the contact surface in which the superficial part is formed is greater than or equal to 653 Hv and less than or equal to 800 Hv.

4. The rolling bearing according to claim 1 or claim 2, wherein
in a sectional view that is orthogonal to the contact surface in which the superficial part is formed, a total of greater than or equal to 80 precipitates having a grain size of less than or equal to 0.50 µm exist per 100 µm² in the superficial part, and a total of area fractions of precipitates in the superficial part is greater than or equal to 2% and less than or equal to 7%,
a volume fraction of retained austenite quantity at a position of 50 µm deep from the contact surface in which the superficial part is formed is greater than or equal to 25% and less than or equal to 35%, and
hardness at a position of 50 µm deep from the contact surface in which the superficial part is formed is greater than or equal to 653 Hv and less than or equal to 800 Hv.

5. A rolling bearing comprising:
a plurality of balls; and
two raceway members,
the balls and the raceway members having a contact surface,
at least either of the balls and the raceway members having a superficial part formed in a region from the contact surface to a depth of 20 µm,
a member in which the superficial part is formed in the contact surface among the balls and the raceway members being made of steel that has been quenched,
the steel containing greater than or equal to 0.70 mass% and less than or equal to 1.10 mass% of carbon, greater than or equal to 0.15 mass% and less than or equal to 0.35 mass% of silicon, greater than or equal to 0.30 mass% and less than or equal to 0.60 mass% of manganese, greater than or equal to 1.30 mass% and less than or equal to 1.60 mass% of chromium, greater than or equal to 0.01 mass% and less than or equal to 0.50 mass% of molybdenum, and greater than or equal to 0.01 mass% and less than or equal to 0.50 mass% of vanadium, and a remainder of iron and inevitable impurities,
a content of nitrogen in the superficial part being greater than or equal to 0.2 mass% and less than or equal to 0.8 mass%,
the raceway members being an inner ring and an outer ring,
an outer diameter of the inner ring and an inner diameter of the outer ring being greater than or equal to a value resulting from subtracting a diameter of the ball from a pitch circle diameter of balls and less than or equal to a value resulting from adding a diameter of the ball to a pitch circle diameter of balls, respectively,
thickness of the outer ring being set so that a tensile stress exerted to the outer ring is less than or equal to 700 MPa,
at least either of composite roughness between a first raceway surface which is the contact surface of the inner ring and a rolling surface which is the contact surface of the ball, and composite roughness between a second raceway surface which is the contact surface of the outer ring and the rolling surface being greater than or equal to 0.05 µm,
a contact angle of the ball with the first raceway surface and the second raceway surface being less than 30°.

6. The rolling bearing according to any one of claim 1 to claim 5,
wherein the rolling bearing is for transmission of vehicle, for auxiliary machinery of vehicle, or for motor of vehicle.
